# EUROPEAN PATENT SPECIFICATION

(11) **EP 2 861 900 B1**
(45) Date of publication and mention of the grant of the patent: **06.04.2016**
(21) Application number: 13733087.4
(22) Date of filing: 17.06.2013
(51) Int. Cl.: F16K 31/06

(54) **MULTI-STAGE VALVE HAVING AN AXIALLY MOVABLE SEAT FOR PUSHING A VALVE ELEMENT IN SEALING ENGAGEMENT TOWARDS ANOTHER SEAT**
MEHRSTUFIGES VENTIL MIT AXIAL BEWEGLICHEM SITZ ZUM SCHIEBEN EINES VENTILELEMENTS IN EINER DICHTUNGSEINRASTUNG ZU EINEM NEUEN SITZ
VANNE MULTIÉTAGE AVEC UN SIÈGE MOBILE AXIALEMENT PERMETTANT DE POUSSER UN ÉLÉMENT DE VANNE EN ENGAGEMENT ÉTANCHE VERS UN AUTRE SIÈGE

(30) Priority: 18.06.2012 NL 2009023
(43) Date of publication of application: 22.04.2015
(73) Proprietor: ASCO CONTROLS B.V., 3925 BD Scherpenzeel (NL)
(72) Inventor: VAN KOMMER, Robbie, NL-3941 GB Doorn (NL)
(74) Representative: EP&C
(86) International application number: PCT/NL2013/050427
(87) International publication number: WO 2013/191541

(56) References cited:
- GB-A- 2 103 337
- JP-A- S62 177 385
- US-A- 5 092 365

## Description

The invention relates to a multi-stage valve for the regulation of a medium flow, the multi-stage valve being of the type comprising a valve housing having an axial bore which connects to at least three medium ports, with a valve element being axially movable inside the bore between at least two seats for the valve element to sealingly engage against in respective end positions.

From the state of the art numerous variants are known of such valves. For example, applicant sells for some years a balanced 3-way solenoid valve of the direct acting type under the ASCO series 327. This type of solenoid valve can, amongst others, be used to steer large butterfly valves and ball valves which are present in the process industry and petrochemical industry. These valves need to be absolutely reliable in order to be able to guarantee the end product of the process it helps steering. Because of the varying environmental conditions and process conditions like temperature and medium used, the valves need to cope with high demands and for example be resistant against a large scope of conditions in order to be able to provide reliable sealings under a certain required pressure.

Another example of a 3-way valve is known from JP-10038132 which relates to the provision of a manual operating device in a 3-way solenoid valve. This valve comprises a housing which delimits an axial bore which connects to three medium ports. Inside the bore a movable valve element is provided which can be moved between two end positions to sealingly engage a respective one of two different seats. A manual button is placed on the upper side of the housing. The button lies against a diaphragm which in turn lies against an upper multi-armed manual valve guide. This upper manual valve guide is equipped with two pushing arms for pushing against the valve element. When the button is pressed, the upper manual valve guide is brought into contact with the valve element. Thus it is possible to manually push the valve element downwards from its upper seat towards its lower seat. Below the lower seat a solenoid is provided which is mounted to a lower side of the housing. During rest, a core of the solenoid is pushed upwards by means of a lower spring. A lower multi-armed valve guide is provided in between the core and the valve element, and pushes the valve element upwards against the upper seat. If a coil of the solenoid is then activated, the core is pulled downwards, causing the valve element to be pushed downwards against the lower seat by means of an upper spring. Thus activation of the solenoid automatically switches the valve element to its lower end position, whereas a subsequent deactivation of the solenoid causes the valve element to automatically return to its upper end position. When in this upper end position it is possible to manually switch the valve element to its lower end position by pressing the button.

A disadvantage with this known 3-way valve is that its construction is rather complex, expensive and vulnerable to damage. Furthermore undesired premature leakages of pressurized fluids between the respective ports may start occurring during the described switching processes.

JP 62 177385 shows another example of a solenoid valve device with both a manual operation option and a solenoid operation option. The device comprises an outer housing and an inner case which is movable in an axial direction inside the housing. Inside the inner case a block is axially movable. In the embodiment as shown in fig. 5-7, three ports are provided in the housing, two passages are provided in the case, and two passages are provided in the block. The block can be displaced by means of operation of a solenoid acting on a stem. The inner case can be displaced by means of manual operation acting on a stem. The purpose of the manual operation is to be able to cope with possible defects in the electric circuit of the solenoid.

A disadvantage with this known construction is that it does not comprise a true valve element which is axially movable to and from in between seats. In fact no seats at all have been provided at end positions for the inner case and/or block to sealingly engage with in first and second end positions while disconnecting some of the ports from each other. Furthermore it is noted that in the fig. 5-7 embodiment, in each of the switched-on/switched-off situations, two of the ports get connected with each other. Thus a leakage-free switching is not possible. In the starting situation, in which neither the solenoid neither the manual operation means are activated, both the inner case and block are biased inwardly. Together this makes it impossible to use this type of valve as a tamper proof no-voltage release on/off steering valve.

US 5,092,365 shows a three-way solenoid operated valve with a supply port, an air inlet and an exhaust port. A poppet valve is movable inside a housing between a first seat and a second seat by means of a suitable operation of a solenoid in combination with a return spring. In the inoperative situation the return spring presses the poppet valve sealing against the first seat while leaving free a flow orifice between the poppet valve and the second seat. A subsequent energizing of the solenoid presses the poppet valve contra the action of the return spring sealing against the second seat while leaving free a flow orifice between the poppet valve and the first seat. The first seat is fixed inside the housing. The second seat is semi-fixed and can be adjusted in position by means of screwing a so-called valve retainer further or less far into the housing. For this the valve retainer is provided with a slit inside which a screw driver can be placed. The purpose of the adjustability of the second seat on the one hand is to be able to vary the flow orifice between the poppet valve and the second seat, and on the other hand to make it possible to accurately set the valve stroke.

A disadvantage with this known construction is that it is only possible to have it operated by means of one set of operation means, that is to say the solenoid. Manual operation via the valve retainer not only is not foreseen for performing a switching operation, it also would have no use. This is because a manual inward screwing of the valve retainer in the inoperative situation, that is to say during non-energizing of the solenoid, would merely lead to the poppet valve getting to lie sealing against both its first and second seat. A manual outward screwing of the valve retainer in the inoperative situation on the other hand would merely lead to the valve stroke and the flow orifice between the second seat and the poppet valve getting larger. It is not possible to switch this three-way valve merely via operation of the valve retainer.

The present invention aims to at least partly overcome the abovementioned disadvantages, or to provide a usable alternative. In particular the invention aims to provide a multi-stage valve with which it is possible to switch ports without premature leakage of medium towards or out of one of the ports having to occur.

This aim is achieved by a multi-stage valve according to claim 1. The multi-stage valve comprises a housing having an axial bore which connects to at least a first, second and third medium port. A valve element is provided which is axially moveable inside the bore between first and second end positions. The valve further comprises a first seat for the valve element to sealingly engage with in the first end position while disconnecting the first and second medium port from each other, and a second seat for the valve element to sealingly engage with in the second end position while disconnecting the second and third medium port from each other. The valve element lies in between those seats. According to the inventive thought the second seat has been made freely axially slidable within a certain stroke between a starting position and a forward switching position. In the starting position the second seat lies at such a large distance from the first seat that the valve element can not sealingly engage with both seats at the same time, and thus leaves free a flow communication between at least two of the ports. In the forward switching position the second seat comes to lie at a smaller distance from the first seat compared to the starting position, in particular at such a small distance that both the first and second seats at the same time can sealingly engage with the valve element. First operating means have been provided which, when operated, can act on the second seat for moving it in the axial direction. The second seat then moves from its starting position towards its switching position while pushing the valve element towards its first end position. During this forward pushing the valve element at the same time maintains to sealingly engage the second seat. The second seat is designed such that it is free to automatically be returned from its forward switching position to its backward starting position as soon as the first operation means are no longer operated. According to the invention the second seat is biased outwardly to its starting position. This automatic return of the second seat to its starting position can take place independent of the valve element also having to leave its first end position and thus without the valve element having to return to its second end position. The second seat is only able to maintain its forward switching position when the first operation means maintain to be operated. A release, inactivation or the like of the first operation means immediately and automatically has the effect that the second seat shall start to move back to its starting position. During non-operation of the first operation means, there is only one position for the second seat in which it is able to take-up axial outwards forces from within the valve, and that is in its starting position. In contrast to US 5,092,365, the second seat does not get automatically fixated in either one of its starting or switching positions and/or in intermediate positions lying there between.

This advantageously makes it possible to switch ports without premature leakages of media between the second and third ports being able to occur. The flow connection between one set of medium ports can be safely and reliably disconnected from each other first before a flow connection between another set of medium ports is opened. To be more specific, only when the closing of the flow connection between the first and second ports is completed, the second and third medium ports are connected with each other.

If, for example the second port is an inlet port which is fed with pressurized medium, whereas the first and third ports are outlet ports, then it can now be fully prevented that the pressurized medium already starts leaking from the second port towards the third port during the switching process, that is to say when this medium is also still flowing from the second to the first port.

If, for example, the first and third ports are inlet ports which are fed with pressurized media, then those media can not start to mix with each other during the switching process. It can be fully prevented that pressurized medium already starts leaking from the third port towards the second port during the switching process, that is to say when pressurized medium is also flowing from the first to the second port.

Furthermore, the invention advantageously even makes it possible to temporarily disconnect all inlet and outlet ports from each other. Because of the axially movable second seat, the valve element is now able to sealingly engage both the first and second seat at the same time.

In a preferred embodiment the second seat forms part of a movable piston body which forms a piston-cylinder assembly with the bore. For this the piston body is axially movable in the bore while sliding sealingly alongside circumferential wall parts of the bore. Furthermore, the piston body comprises a flow channel which extends through a center part of the second seat an in between the second and third medium port. The flow channel is able to connect or disconnect the flow communication between the second and the third ports in dependency of whether the valve element sealingly engages the second seat or not. The construction with the second seat provided on a piston body provides for a simple construction which can be easily assembled and disassembled if necessary.

In a further embodiment the third medium port connects sideways to the axial bore, while at the same time the piston body has been given large enough axial dimensions for it to be able to sealingly engage circumferential wall parts of the axial bore which lie in front and behind the third medium port during its entire movement in the axial direction between its end positions. This makes it possible to maintain the piston body to sealingly engage the bore at both sides of the third medium port during this entire movement.

In a variant the valve element may comprise a first guiding portion at the side of the second seat, which guiding portion is axially guided inside a complementary axially directed guiding opening which is provided for this purpose in the piston body. Thus the valve element can more easily be smoothly guided inside the bore. The guiding opening in the piston body preferably is provided inside the piston body not coinciding with the flow channel. Thus the first guiding portion does not interfere with the flow of medium and for example can be made as a circumferentially closed segment.

According to another embodiment the axially movable second seat is biased by means of a spring towards its starting position. Thus the second seat is able to automatically be returned to its starting position by means of the spring as soon as the first operation means are no longer active. This returning of the second seat to its starting position then immediately connects the second and third ports with each other and thus gives way for medium to start flowing there between. In the alternative of using a spring for obtaining the bias it is also possible to have the difference in medium pressure, which is present inside the second and third medium port, move the second seat back to its starting position again.

The first operating means preferably are manually operable and comprise a part, like a push button or rotation knob, which can be manually manipulated by a user from outside the valve housing. In the alternative the first operating means can also be formed by automatically controllable operating means, like for example a solenoid.

In a further preferred embodiment second operating means are provided which are able to act on the valve element for keeping it in its first end position as soon as the valve element has been brought in this first end position by means of a suitable operation of the first operation means. Owing to the provision of the first operating means acting on the second seat in combination with the provision of the second operating means acting on the valve element, it is now advantageously possible to use the valve as an on/off steering valve. The second operating means preferably are unable or to weak to all by itself bring the valve element towards its first end position in which it sealingly engages the first seat. This then needs to be done by means of temporarily operating the first operating means. As soon as the first operating means are no longer active, the activated second operating means keep the valve element in the first end position in which it sealingly engages the first seat, whereas the second seat is free to return to its starting position in which it comes to lie at a distance form the valve element and thus connects the second and third ports with each other.

The second operating means can be formed by manually or automatically controllable operating means, like a solenoid.

If the first operating means are of the manual operating type while the second operating means are of the automatically controllable type, then the valve can be used as a safety valve or a tamper proof valve, of which the first and second medium ports can only be disconnected from each other and then keep on being disconnected from each other by first manually pushing the second seat forward together with the valve element, and to then let the second operating means take over to keep the valve element there while the first operating means are released in order to give the second seat the full freedom to return to its starting position.

In a variant it is also possible to construct the second operating means strong enough to not only keep the valve element in its first end position, but to also be able to move the valve element towards its first end position without needing or getting any support from the first operating means. This gives the user the freedom and flexibility to either perform a leakage free switching by means of an operation of the first operating means, or a non-leakage free switching by means of an operation of the second operating means.

The first seat may be constructed similar to the second seat, meaning that the first seat, like the second seat, may also be made axially movable in the bore. By then also providing specific operating means able to act on the first seat, it can be moved in the axial direction while pushing the valve element towards its second end position with the valve element maintaining to sealingly engage the first seat during this movement. This makes it possible for the valve to be switched in two opposite directions while maintaining at least one sealing engagement between the valve element and one of its seats during this movement. If such a double action is not necessary then the first seat may be fixedly provided inside the bore of the housing. This makes the construction simpler and easier to provide the respective operating means.

Further preferred embodiments are stated in the dependent claims.

The invention also relates to a method for switching a multi-stage valve according claims 13-15.

The invention shall be explained in more detail with reference to the accompanying drawings, in which:
- Figure 1 shows an embodiment of a 3-way valve according to the invention in a switched-off position;
- Figure 2 is a view according to figure 1 during a switching process; and
- Figure 3 is a view according to figure 1 in a switched-on position.

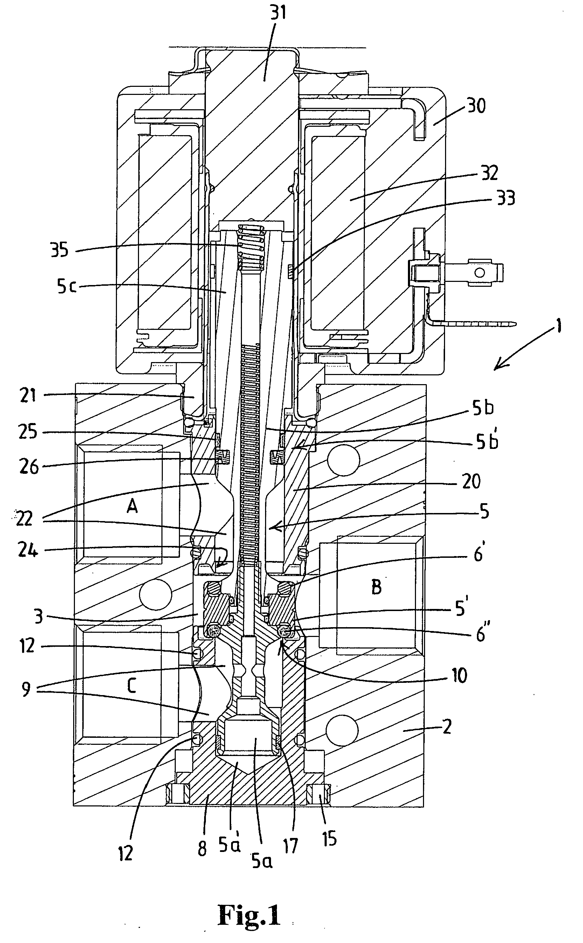

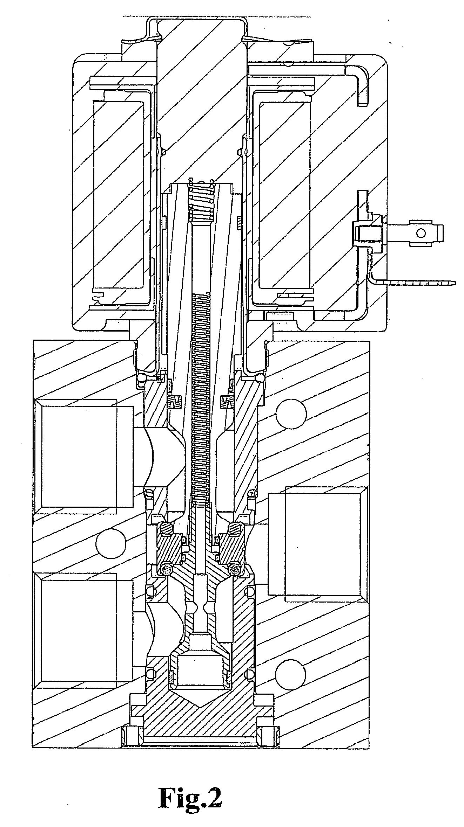

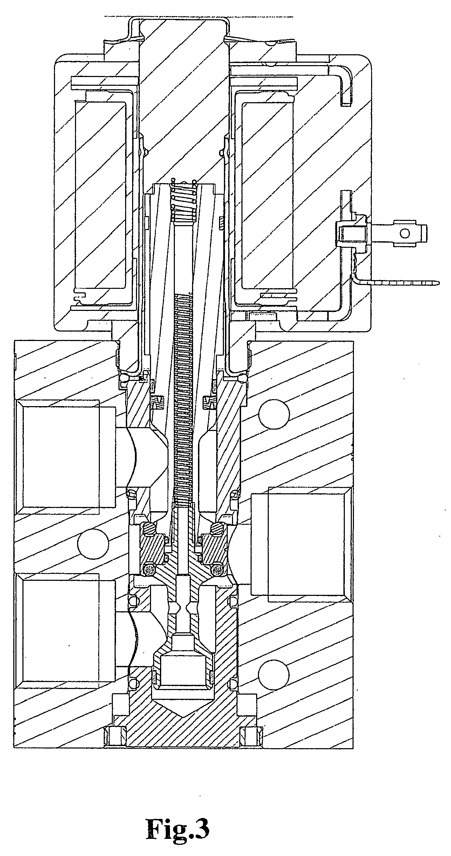

The 3-way valve as shown in figure 1-3 in its entirety has been given the reference numeral 1. The valve 1 comprises a housing which is provided with a first medium port A, a second medium port B, and a third medium port C. Each of those medium ports A, B, C extends in a sideways direction relative to an axial bore 3. The axial bore 3 extends in an axial direction throughout the entire housing 2. Inside the bore 3 an axially movable valve element 5 is provided. The valve element 5 is moveable between a first end position as shown in Figure 2 and 3 and a second end position as shown in Figure 1. The valve element 5 comprises a disc holder 5' which is provided with first and second sealing rings 6', 6". Furthermore the valve element 5 comprises a first guiding portion 5a as well as a second guiding portion 5b, which will be explained later on.

At one side the bore 3 is closed by means of an axially movable piston body 8. The piston body 8 is movable between a starting position as shown in Figure 1 and 3 and a forward switching position as shown in Figure 2. The movable piston body 8 comprises an angled flow channel 9 which is able to connect the ports B and C. At its inner side, the movable piston body 8 comprises a ring-shaped seat 10 which extends around the flow channel 9. In Figure 1 and 2 this so-called second seat 10 sealingly engages with the sealing ring 6" and thus closes the flow channel 9 and disconnects the ports B and C.

The movable piston body 8 comprises sealing rings 12 which are placed in circumferential grooves extending around the outer circumference of the piston body 9. One of those rings 12 sealingly engages the bore 3 upstream of the port C, whereas the other ring 12 sealingly engages the bore 3 downstream of the port C.

An outer part of the movable piston body 8 forms a push button which can be manually pushed into the housing 2 by means of an operator. In order to prevent the movable piston body 8 to fall out of the housing 2, it is delimited by means of a lock nut 15.

Inside the movable piston body 8 past a first part of the angled flow channel 9, a blind guiding opening 5a' is provided inside which the first guiding portion 5a of the valve element 5 is free to slide back and forth in the axial direction. A rider ring 17 has been placed in a circumferential groove of the first guiding portion 5a in order to provide for a smooth guidance.

At the side opposite the movable piston body 8, the bore 3 is provided with a fixed piston body 20. This fixed piston body 20 is fixedly mounted inside the bore 3 and is locked in place by means of a lock nut 21. The fixed piston body 20 comprises an angled flow channel 22 which is able to connect the ports A and B. At its inner side the fixed piston body 20 is provided with a ring-shaped seat 24 which extends around the flow channel 22. In Figure 2 and 3 this so-called first seat 24 sealingly engages with the sealing ring 6' and thus closes the flow channel 22 and disconnects the ports A and B.

Inside the fixed piston body 20 past a first part of the flow channel 22, a throughgoing guiding opening 5b' is provided through which the second guiding portion 5b of the valve element 5 is free to slide back and forth in the axial direction. A rider ring 25 has been placed in a circumferential groove of the second guiding portion 5b in order to provide for a smooth guidance. The second guiding portion 5b is furthermore provided with a dynamic seal 26 such that it is also sealingly guided in the axial direction inside the fixed piston body 20.

At the side of the fixed piston body 20, a solenoid 30 is mounted to the housing 2. The solenoid 30 comprises a plug nut 31 and a coil 32 which can be energized with electricity. The valve element 5 comprises a core portion 5c which partly extends inside the solenoid 30. The core portion 5c is also provided with a rider ring 33 for smooth guidance inside the solenoid 30.

Between the plug nut 31 and the core portion 5c a so-called kick-off spring 35 is provided which serves the purpose of biasing the valve element 5 towards its second end position. The spring 35 has been constructed strong enough such that it is well able to prevent the valve element 5 from starting to move out of its second end position towards its first end position, merely because of the solenoid 30 being activated. On the other hand the spring 35 has been constructed weak enough such that it is not able to cause the valve element 5 from starting to move out of its first end position towards its second end position, as long as the solenoid 30 remains activated. This is because in this first end position the core portion 5c of the valve element 5 lies close enough to the plug nut 31 of the solenoid 30 for the attracting force of the solenoid 30 to keep the valve element 5 there as long as it remains energized.

A possible method for switching the valve 1 shall now be explained.

Starting in the switched-off situation as is shown in Figure 1, that is to say with the ports A and B connected to each other and the ports B and C disconnected from each other. For this situation it makes no difference whether or not the solenoid 30 is activated. The spring 35 shall keep the valve element 5 in its second end position anyway. For then switching the valve, first the solenoid 30 needs to be energized. A user can then push against the outer button part of the movable piston organ 8 and thus press it out of the starting position of Figure 1 inwards into the housing 2 towards the forward switching position of Figure 2. With this the user at the same time pushes the valve element 5 upwards towards its first end position while compressing the spring 35, and while maintaining the ports B and C to be fully disconnected from each other. As soon as the valve element 5 then reaches its first end position, the energized solenoid 30 keeps the valve element 5 in this first end position as long as the solenoid 30 remains activated. In this first end position, as is shown in Figure 2, the valve element 5 closes the flow channel 22 while still keeping the flow channel 9 closed. Thus all ports A, B and C are disconnected from each other. If the user then releases the button part of the piston organ 8, then the pressure difference between the ports B and C would cause the movable piston body 8 to return to its starting position. This is shown in Figure 3. In this Figure 3 the ports B and C are connected to each other, while the ports A and B remain being disconnected from each other. The valve 1 is then switched-on.

Should in the situation of Figure 3 the solenoid be deactivated, then the spring 35 would immediately cause the valve element 5 to return to its second end position as is shown in Figure 1, that is to say the ports A and B would be connected with ach other again, whereas the ports B and C would be disconnected from each other again. The same switched-off situation of Figure 1 would also automatically be achieved if in the switched-on situation of Figure 3, the electricity would fall out. Thus the valve can be used as safety valve with a tamper proof necessary manual operating requirement for the valve to be switched-on again.

Besides the embodiments shown, many variant embodiments are possible. For example a larger number of ports can be provided connecting to the axial bore, in combination with the valve element comprising more then one disc holder or other suitable portion which is able to sealingly engage further seats provided inside the axial bore. Instead of the manually operable button part it is also possible to provide other types of first operating means. Instead of a solenoid it is also possible to provide other types of second operating means. The automatically operable operating means can be controlled by means of a suitable control unit. Instead of forming parts of piston bodies, the seats can also be constructed otherwise, as long as the second seat remains to be axially movable inside the bore in such a way that during such an axial movement it is able to close of the connection between two ports. The first seat can also be made as an integral part of the housing.

Thus a user friendly, cost effective and reliable valve is achieved which can be used for all kind of purposes like for example as a tamper proof no-voltage release on/off steering valve.

## Claims

1. Multi-stage valve comprising:
- a housing (2) having an axial bore (3) which connects to at least first, second and third medium ports (A, B, C);
- a valve element (5) which is axially moveable in the bore (3) between first and second end positions;
- a first seat (24) for the valve element (5) to sealingly engage against in the first end position while disconnecting the first and second medium port (A, B) from each other;
- a second seat (10) for the valve element to sealingly engage against in the second end position while disconnecting the second and third medium port (B, C) from each other; and
- first operating means operable for moving the valve element (5) in the axial direction towards its first end position,
in which the second seat (10) is axially movable in the bore (3),
**characterized in that**,
the second seat is axially slidable inside the bore (3) between a starting position and a forward switching position,
wherein the first operating means are designed to act on the second seat (10) for sliding it in the axial direction from its starting position towards its forward switching position when operated while the second seat (10) pushes the valve element (5) towards its first end position while the valve element (5) maintains to sealingly engage the second seat (10) during this movement, and
wherein the second seat (10) has the freedom to automatically return from its forward switching position to its starting position when the first operation means are no longer operated, and
wherein the second seat (10) is biased outwardly to its starting position.

2. Valve according to claim 1, wherein the second seat (10) forms part of a movable piston body (8) which is axially slidable in the axial bore (3) and comprises a flow channel (9) which connects to the second and third medium ports (B, C).

3. Valve according to claim 2, wherein the third medium port (C) connects sideways to the axial bore (3), wherein the piston body (8) sealingly engages the axial bore (3) in front and behind the third medium port (C).

4. Valve according to claim 2 or 3, wherein the valve element (5) comprises a first guiding portion (5a) at the side of the second seat (10), which guiding portion (5a) is slidably guided inside an axially directed guiding opening (5a') in the piston body (8).

5. Valve according to one of the preceding claims, wherein second operating means are provided which are activatable for keeping the valve element (5) in the first end position independently of the first operating means,
wherein in particular the second operating means are designed such that they are unable to move the valve element (5) from its second towards its first end position, while at the same time they are able to keep the valve element (5) in its first end position after it has been brought thereto by means of operation of the first operating means, and
wherein more in particular the valve element (5) comprises metal and the second operating means comprise a solenoid (30).

6. Valve according to one of the preceding claims, wherein the first operating means comprise an operating part which is manually operable from outside the housing (2), and wherein in particular the operating part is a push button.

7. Valve according to one of the preceding claims, wherein the first seat (24) is fixedly provided inside the housing (2).

8. Valve according to claim 7, wherein the first seat (24) forms part of a fixed piston body (20) which comprises a flow channel (22) which connects to the first and second medium ports (A, B).

9. Valve according to claim 8, wherein the first medium port (A) connects sideways to the axial bore (3), wherein the fixed piston body (20) sealingly engages the axial bore (3) in front and behind the first medium port (A).

10. Valve according to claim 8 or 9, wherein the valve element (5) comprises a second guiding portion (5b) at the side of the first seat (24), which second guiding portion (5b) is slidably guided inside an axially directed guiding opening (5b') in the fixed piston body (20).

11. Valve according to one of the preceding claims, wherein the second medium port (B) connects sideways to the axial bore (3) at a position in between the first and second end positions and the first and second seats (24, 10) respectively.

12. Valve according to one of the preceding claims, wherein the valve element (5) is biased towards the second end position.

13. Method for switching a multi stage valve according to one of the preceding claims, comprising the steps of:
- operation of the first operating means; and
- having the first operating means move the second seat (10) in the axial direction while the second seat (10) pushes the valve element (5) towards its first end position while the valve element (5) maintains to sealingly engage the second seat (10) during this movement.

14. Method according to claim 13, wherein after the step of having the first operating means move the second seat (10) to its switched position and valve element (5) to its first end position, the first operating means are no longer operated and the second seat (10) is automatically returned to its starting position.

15. Method according to claim 14, wherein second operating means are operated for keeping the valve element (5) in its first end position, and
wherein in particular the second operating means are operated for taking over the valve element (5) in its first end position only after it has been brought thereto by means of operation of the first operating means.

## Patentansprüche

1. Mehrstufiges Ventil, umfassend:
- ein Gehäuse (2) mit einer axialen Bohrung (3), die zu zumindest ersten, zweiten und dritten Mediumdurchlässen (A, B, C) verbindet;
- ein Ventilelement (5), das zwischen ersten und zweiten Endpositionen axial in der Bohrung (3) beweglich ist;
- einen ersten Sitz (24) für das Ventilelement (5) zum abdichtenden Eingreifen daran in der ersten Endposition, während der erste und zweite Mediumdurchlass (A, B) voneinander getrennt werden;
- einen zweiten Sitz (10) für das Ventilelement zum abdichtenden Eingreifen daran in der zweiten Endposition, während der zweite und dritte Mediumdurchlass (B, C) voneinander getrennt werden; und
- erste Betriebsmittel, die zum Bewegen des Ventilelements (5) in der axialen Richtung zur ersten Endposition hin betriebsfähig sind,
wobei der zweite Sitz (10) axial in der Bohrung (3) beweglich ist,
**dadurch gekennzeichnet, dass**
der zweite Sitz innerhalb der Bohrung (3) zwischen einer Startposition und einer Vorwärtsschaltposition axial verschiebbar ist,
wobei die ersten Betriebsmittel zum Einwirken auf den zweiten Sitz (10) zum Verschieben desselben in der axialen Richtung aus seiner Startposition zu seiner Vorwärtsschaltposition gestaltet sind, wenn sie betrieben werden, während der zweite Sitz (10) das Ventilelement (5) zu seiner ersten Endposition hin schiebt, während das Ventilelement (5) die abdichtende Ineingriffnahme des zweiten Sitzes (10) während dieser Bewegung beibehält, und
wobei der zweite Sitz (10) die Freiheit aufweist, automatisch aus seiner Vorwärtsschaltposition in seine Startposition zurückzukehren, wenn die ersten Betriebsmittel nicht länger betrieben werden, und
wobei der zweite Sitz (10) nach außen zu seiner Startposition vorgespannt ist.

2. Ventil nach Anspruch 1, wobei der zweite Sitz (10) ein Teil eines beweglichen Kolbenkörpers (8) bildet, der axial in der Bohrung (3) verschiebbar ist und einen Flusskanal (9) umfasst, der zum zweiten und dritten Mediumdurchlass (B, C) verbindet.

3. Ventil nach Anspruch 2, wobei der dritte Mediumdurchlass (C) seitwärts zur axialen Bohrung (3) verbindet, wobei der Kolbenkörper (8) die axiale Bohrung (3) vor und hinter dem dritten Mediumdurchlass (C) abdichtend in Eingriff nimmt.

4. Ventil nach einem der Ansprüche 2 oder 3, wobei das Ventilelement (5) einen ersten Führungsabschnitt (5a) an der Seite des zweiten Sitzes (10) umfasst, wobei der Führungsabschnitt (5a) innerhalb einer axial gerichteten Führungsöffnung (5a') im Kolbenkörper (8) verschiebbar geführt ist.

5. Ventil nach einem der vorhergehenden Ansprüche, wobei zweite Betriebsmittel vorgesehen sind, die zum Erhalten des Ventilelements (5) in der ersten Endposition unabhängig von den ersten Betriebsmitteln aktivierbar sind,
wobei insbesondere die zweiten Betriebsmittel derart gestaltet sind, dass sie außerstande sind, das Ventilelement (5) aus seiner zweiten zu seiner ersten Endposition hin zu bewegen, während sie gleichzeitig dazu imstande sind, das Ventilelement (5) in seiner ersten Endposition zu halten, nachdem es mittels des Betriebs der ersten Betriebsmittel dorthin gebracht wurde, und
wobei weiter insbesondere das Ventilelement (5) Metall umfasst und die zweiten Betriebsmittel einen Solenoid (30) umfassen.

6. Ventil nach einem der vorhergehenden Ansprüche, wobei die ersten Betriebsmittel ein Betriebsteil umfassen, das manuell von außerhalb des Gehäuses (2) betreibbar ist, und wobei insbesondere das Betriebsteil ein Druckknopf ist.

7. Ventil nach einem der vorhergehenden Ansprüche, wobei der erste Sitz (24) fest innerhalb des Gehäuses (2) vorgesehen ist.

8. Ventil nach Anspruch 7, wobei der erste Sitz (24) ein Teil eines festen Kolbenkörpers (20) bildet, der einen Stromkanal (22) umfasst, welcher zum ersten und zweiten Mediumdurchlass (A, B) verbindet.

9. Ventil nach Anspruch 8, wobei der erste Mediumdurchlass (A) seitwärts zur axialen Bohrung (3) verbindet, wobei der feste Kolbenkörper (20) die axiale Bohrung (3) vor und hinter dem ersten Mediumdurchlass (A) abdichtend in Eingriff nimmt.

10. Ventil nach einem der Ansprüche 8 oder 9, wobei das Ventilelement (5) einen zweiten Führungsabschnitt (5b) an der Seite des ersten Sitzes (24) umfasst, wobei der zweite (5b) innerhalb einer axial gerichteten Führungsöffnung (5b') im festen Kolbenkörper (20) verschiebbar geführt ist.

11. Ventil nach einem der vorhergehenden Ansprüche, wobei der zweite Mediumdurchlass (B) seitwärts zur axialen Bohrung (3) an einer Position zwischen der ersten und zweiten Endposition bzw. dem ersten und zweiten Sitz (24, 10) verbindet.

12. Ventil nach einem der vorhergehenden Ansprüche, wobei das Ventilelement (5) zur zweiten Endposition hin vorgespannt ist.

13. Verfahren zum Umschalten eines mehrstufigen Ventils nach einem der vorhergehenden Ansprüche, wobei das Verfahren die folgenden Schritte umfasst:
- Betrieb der ersten Betriebsmittel; und
- Veranlassen, dass die ersten Betriebsmittel den zweiten Sitz (10) in der axialen Richtung bewegen, während der zweite Sitz (10) das Ventilelement (5) zur ersten Endposition hin schiebt, während das Ventilelement (5) die abdichtende Ineingriffnahme des zweiten Sitzes (10) während dieser Bewegung beibehält.

14. Verfahren nach Anspruch 13, wobei nach dem Schritt des Veranlassens, dass die ersten Betriebsmittel den zweiten Sitz (10) in seine umgeschaltete Position und das Ventilelement (5) in seine erste Endposition bewegen, die ersten Betriebsmittel nicht länger betrieben werden und der zweite Sitz (10) automatisch in seine Startposition zurückgestellt wird.

15. Verfahren nach Anspruch 14, wobei die zweiten Betriebsmittel zum Halten des Ventilelements (5) in seiner ersten Endposition betrieben werden, und
wobei insbesondere die zweiten Betriebsmittel nur zum Überführen des Ventilelements (5) in seine erste Endposition betrieben werden, nachdem es mittels des Betriebs der ersten Betriebsmittel dorthin gebracht wurde.

## Revendications

1. Valve à plusieurs étages comprenant :
un boîtier (2) ayant un alésage axial (3) qui raccorde au moins des premier, deuxième et troisième orifices pour fluide (A, B, C) ;
un élément de valve (5) qui est axialement mobile dans l'alésage (3) entre des première et seconde positions d'extrémité ;
un premier siège (24) pour l'élément de valve (5) afin de se mettre en prise, de manière étanche, dans la première position d'extrémité tout en déconnectant les premier et deuxième orifices pour fluide (A, B) l'un de l'autre ;
un second siège (10) pour que l'élément de valve se mette en prise de manière étanche dans la seconde position d'extrémité tout en tant déconnectant les deuxième et troisième orifice pour fluide (B, C) l'un de l'autre ; et
des premiers moyens de fonctionnement pouvant fonctionner pour déplacer l'élément de valve (5) dans la direction axiale vers sa première position d'extrémité,
dans laquelle le second siège (10) est axialement mobile dans l'alésage (3),
**caractérisé en ce que** :
le second siège peut coulisser axialement à l'intérieur de l'alésage (3) entre une position de démarrage et une position de commutation vers l'avant,
dans lequel les premier moyens de fonctionnement sont conçus pour agir sur le second siège (10) pour le faire coulisser dans la direction axiale, de sa position de démarrage vers sa position de commutation vers l'avant lorsqu'ils sont actionnés, alors que le second siège (10) pousse l'élément de valve (5) vers sa première position d'extrémité alors que l'élément de valve (5) se maintient pour mettre en prise de manière étanche le second siège (10) pendant ce mouvement, et
dans laquelle le second siège (10) a la liberté de revenir automatiquement de sa position de commutation vers l'avant à sa position de démarrage, lorsque les premiers moyens de fonctionnement ne sont plus actionnés, et
dans laquelle le second siège (10) est sollicité vers l'extérieur vers sa position de démarrage.

2. Valve selon la revendication 1, dans laquelle le second siège (10) fait partie d'un corps de piston mobile (8) qui peut axialement coulisser dans l'alésage axial (3) et comprend un canal d'écoulement (9) qui se raccorde aux deuxième et troisième orifices pour fluide (B, C).

3. Valve selon la revendication 2, dans laquelle le troisième orifice pour fluide (C) se raccorde latéralement à l'alésage axial (3), dans laquelle le corps de piston (8) met en prise, de manière étanche, l'alésage axial (3) devant et derrière le troisième orifice pour fluide (C).

4. Valve selon la revendication 2 ou 3, dans laquelle l'élément de valve (5) comprend une première partie de guidage (5a) du côté du second siège (10), laquelle partie de guidage (5a) est guidée de manière coulissante à l'intérieur d'une ouverture de guidage (5a') dirigée de manière axiale dans le corps de piston (8).

5. Valve selon l'une des revendications précédentes, dans laquelle on prévoit des seconds moyens de fonctionnement qui peuvent être activés pour maintenir l'élément de valve (5) dans la première position d'extrémité indépendamment des premiers moyens de fonctionnement,
dans laquelle, en particulier, les seconds moyens de fonctionnement sont conçus de sorte qu'ils ne peuvent pas déplacer l'élément de valve (5) de sa seconde vers sa première position d'extrémité, alors, qu'en même temps, ils peuvent maintenir l'élément de valve (5) dans sa première position d'extrémité après qu'il y a été amené au moyen du fonctionnement des premiers moyens de fonctionnement, et
dans laquelle, plus particulièrement, l'élément de valve (5) comprend du métal et les seconds moyens de fonctionnement comprennent un solénoïde (30).

6. Valve selon l'une des revendications précédentes, dans laquelle les premiers moyens de fonctionnement comprennent une partie opérationnelle qui peut être manuellement actionnée depuis l'extérieur du boîtier (2), et dans laquelle, en particulier, la partie opérationnelle est un bouton-poussoir.

7. Valve selon l'une des revendications précédentes, dans laquelle le premier siège (24) est prévu de manière fixe à l'intérieur du boîtier (2).

8. Valve selon la revendication 7, dans laquelle le premier siège (24) fait partie d'un corps de piston fixe (20) qui comprend un canal d'écoulement (22) qui se raccorde aux premier et deuxième orifices pour fluide (A, B).

9. Valve selon la revendication 8, dans laquelle le premier orifice pour fluide (A) se raccorde latéralement à l'alésage axial (3), dans laquelle le corps de piston fixe (20) met en prise, de manière étanche, l'alésage axial (3) devant et derrière le premier orifice pour fluide (A).

10. Valve selon la revendication 8 ou 9, dans laquelle l'élément de valve (5) comprend une seconde partie de guidage (5b) du côté du premier siège (24), laquelle seconde partie de guidage (5b) est guidée de manière coulissante à l'intérieur d'une ouverture de guidage (5b') dirigée de manière axiale dans le corps de piston fixe (20).

11. Valve selon l'une des revendications précédentes, dans laquelle le deuxième orifice pour fluide (B) se raccorde latéralement à l'alésage axial (3) dans une position située entre les première et seconde positions d'extrémité et les premier et second sièges (24, 10) respectivement.

12. Valve selon l'une des revendications précédentes, dans laquelle l'élément de valve (5) est sollicité vers la seconde position d'extrémité.

13. Procédé pour commuter une valve à plusieurs étages selon l'une des revendications précédentes, comprenant les étapes consistant à :
actionner les premiers moyens de fonctionnement ; et
permettre aux premiers moyens de fonctionnement de déplacer le second siège (10) dans la direction axiale alors que le second siège (10) pousse l'élément de valve (5) vers sa première position d'extrémité alors que l'élément de valve (5) se maintient pour mettre en prise de manière étanche le second siège (10) pendant son déplacement.

14. Procédé selon la revendication 13, dans lequel, après l'étape consistant à permettre aux premiers moyens de fonctionnement de déplacer le second siège (10) dans sa position commutée et l'élément de valve (5) dans sa première position d'extrémité, les premiers moyens de fonctionnement ne sont plus actionnés et le second siège (10) revient automatiquement dans sa position de départ.

15. Procédé selon la revendication 14, dans lequel les seconds moyens de fonctionnement sont actionnés pour maintenir l'élément de valve (5) dans sa première position d'extrémité, et
dans lequel, en particulier, les seconds moyens de fonctionnement sont actionnés pour ramener l'élément de valve (5) dans sa première position d'extrémité uniquement après qu'il y a été amené au moyen du fonctionnement des premiers moyens de fonctionnement.
